# EUROPEAN PATENT SPECIFICATION

(11) **EP 2 895 554 B1**
(45) Date of publication and mention of the grant of the patent: **30.03.2016**
(21) Application number: 13771223.8
(22) Date of filing: 12.09.2013
(51) Int. Cl.: C08L 69/00

(54) **RESIN COMPOSITION FOR LASER DIRECT STRUCTURING, RESIN MOLDED ARTICLE, AND METHOD FOR MANUFACTURING MOLDED RESIN ARTICLE WITH PLATED LAYER**
HARZZUSAMMENSETZUNG FÜR LASER-DIREKT-STRUKTURIERUNG, HARZGEFORMTER ARTIKEL UND VERFAHREN ZUR HERSTELLUNG EINES FORMHARZARTIKELS MIT EINER PLATTIERTEN SCHICHT
COMPOSITION DE RÉSINE POUR STRUCTURATION DIRECTE PAR LASER, ARTICLE MOULÉ EN RÉSINE, ET PROCÉDÉ DE FABRICATION D'UN ARTICLE MOULÉ EN RÉSINE COMPRENANT UNE COUCHE PLAQUÉE

(30) Priority: 14.09.2012 JP 2012203363
(43) Date of publication of application: 22.07.2015
(73) Proprietor: Mitsubishi Engineering-Plastics Corporation, Tokyo 105-0021 (JP)
(72) Inventor: MOTEGI, Atsushi, Hiratsuka-shi Kanagawa 254-0016 (JP); MARUYAMA, Hiroyoshi, Hiratsuka-shi Kanagawa 254-0016 (JP)
(74) Representative: Ishiguro, Masaoki
(86) International application number: PCT/JP2013/075383
(87) International publication number: WO 2014/042282

(56) References cited:
- WO-A1-2009/141799
- WO-A1-2012/056416

## Description

### Technical Field

The present invention relates to a resin composition for laser direct structuring (hereinafter may be simply referred to as "resin composition"). Furthermore, the present invention relates to a resin molded article produced by molding the resin composition, and a method for manufacturing a resin molded article with a plated layer in which the plated layer is formed, on the surface of the resin molded article.

### Background Art

Recently, along with the development of cellular phones including smart phone, various methods for manufacturing an antenna inside the cellular phone have been studied. Particularly, a method for manufacturing the antenna which can be three-dimensionally designed inside the cellular phones is required. As one of the techniques for forming the three-dimensional antenna, attention to laser direct structuring (hereinafter may be referred to as "LDS") technique has been paid. The LDS technique is a technique, for example, where the irradiation of a surface of a resin molded article containing an LDS additive with a laser activates only the laser-irradiated portion, and then application of a metal to the activated portion causes a plated layer to form. The feature of this technique is to be capable of manufacturing a metallic structure such as an antenna directly on a surface of resin substrate without using adhesives or the like. Such LDS techniques are disclosed, for example, in WO2011/095632 A, WO2011/076729 A, and WO2011/076730 A.

WO2012/056416 A discloses molding compositions for laser direct structuring comprising a thermoplastic resin including a polycarbonate or a polycarbonate/ABS blend, and a laser direct structuring additive selected from a list including tin containing metal oxides and fillers containing a coating of antimony doped with tin oxide.

### Summary of Invention

### Technical Problem

Here, along with the advancement of the LDS technique, there is required a resin composition capable of achieving a higher plating property. An object of the present invention is to solve the problems of the conventional technique, and is to provide a resin composition capable of achieving a higher plating property.

### Solution to Problem

Under such circumstances, as a result of intensive studies by the present inventors, it has been found that, through the use of a LDS additive obtained by blending a small amount of copper and/or lead to an oxide comprising tin and antimony, a plating property can be enhanced, and thus the present invention has been completed. Specifically, the above-mentioned problems have been solved by the means <1>, preferably by <2> to <14> mentioned below.
<1> A resin composition for laser direct structuring, comprising, relative to 100 parts by weight of a resin component comprising 30 to 100% by weight of a polycarbonate resin and 70% by weight or less of a styrene-based resin, 10 to 100 parts by weight of a glass filler and 2 to 20 parts by weight of a laser direct structuring additive, wherein the laser direct structuring additive comprises a metal oxide, a component of the largest blending amount among the metal components is tin, a component of the second largest blending amount is antimony, and in addition lead and/or copper are contained.
<2> The resin composition for laser direct structuring according to <1>, wherein the laser direct structuring additive comprises 90% by weight or more of tin oxide and 3 to 8% by weight of antimony oxide.
<3> The resin composition for laser direct structuring according to <1> or <2>, wherein the laser direct structuring additive comprises 0.01 to 0.1% by weight of lead oxide and/or 0.001 to 0.01% by weight of copper oxide.
<4> The resin composition for laser direct structuring according to any one of <1> to <3>, comprising styrene resin in an amount of 10% by weight or more as a resin component.
<5> The resin composition for laser direct structuring according to any one of <1> to <4>, wherein the glass filler is a glass fiber having an average fiber length of 200 µm or less.
<6> The resin composition for laser direct structuring according to any one of <1> to <5>, wherein the glass filler is coated with at least one sizing agent selected from a polyolefin resin and a silicone resin.
<7> The resin composition for laser direct structuring according to any one of <1> to <6>, further comprising an elastomer and/or a phosphorus-based stabilizer.
<8> A resin-molded article obtained by molding the laser direct structuring composition according to any one of <1> to <7>.
<9> The resin-molded article according to <8>, further comprising a plated layer on a surface of the article.
<10> The resin-molded article according to <8> or <9>, which is a mobile electronic device part.
<11> The resin-molded article according to <9> or <10>, wherein the plated layer has a performance as an antenna.
<12> A method for manufacturing a resin-molded article with a plated layer, comprising irradiating the surface of a resin-molded article, obtained by molding the thermoplastic resin composition according to any one of <1> to <7>, with a laser, and then applying a metal to form the plated layer.
<13> The method for manufacturing a resin-molded article with a plated layer according to <12>, wherein the plating is copper plating.
<14> A method for manufacturing a mobile electronic device part having an antenna, comprising the method for manufacturing a resin-molded article with a plated layer according to <12> or <13>.

### Effects of the invention

According to the present invention, it is possible to provide a resin composition having an excellent plating property.

### Brief Description of Drawings

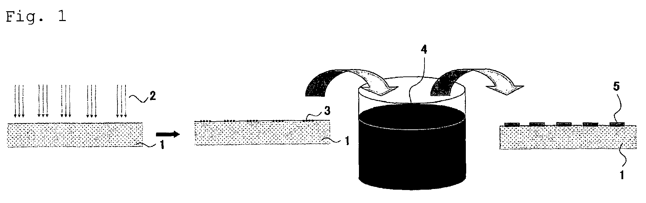

[Fig. 1] Fig. 1 is a schematic view showing a process of providing a plated layer on a surface of resin molded article. In Fig. 1, numeral 1 designates a resin molded article, 2 designates a laser, 3 designates a portion where irradiation with the laser is performed, 4 designates a plating solution, 5 designates a plated layer, respectively.

### Description of Embodiments

Hereinafter, the content of the present invention will be specifically explained. Meanwhile, in the present Description, the expression " to " is used to mean that the former numerical value and the latter numerical value are included as an upper limit value and a lower limit value, respectively.

A resin composition according to the present invention is characterized by comprising, relative to 100 parts by weight of a resin component comprising 30 to 100% by weight of a polycarbonate resin and 70% by weight or less of a styrene-based resin, 10 to 100 parts by weight of a glass filler and 2 to 20 parts by weight of a laser direct structuring additive, the laser direct structuring additive comprising a metal oxide, a component of the largest blending amount among the metal components is tin, a component of the second largest blending amount is antimony, and a component of the third largest blending amount is lead and/or copper. According to this formulation, a higher plating property can be achieved. Furthermore, there can be provided a resin composition having excellent mechanical properties, low dielectric constant, excellent hue, and being hard to be decomposed.

Hereinafter, the resin composition according to the present invention will be explained in detail.

### <Polycarbonate resin>

The polycarbonate resin used in the present invention is not particularly limited, and there can be used any of an aromatic polycarbonate, an aliphatic polycarbonate, an aromatic-aliphatic polycarbonate. Among them, the aromatic polycarbonate is preferable, and more preferable is a thermoplastic aromatic polycarbonate polymer or copolymer obtained by causing an aromatic dihydroxy compound to react with phosgene or a diester of carbonic acid.

The aromatic dihydroxy compounds include 2,2-bis(4-hydroxyphenyl)propane (= bisphenol A), tetramethylbisphenol A, bis(4-hydroxyphenyl)-P-diisopropylbenzene, hydroquinone, resorcinol, 4,4-dihydroxydiphenyl, etc., and preferable is bisphenol A. Furthermore, in order to prepare a composition having high incombustibility, there can be used a compound in which one or more of a tetraalkylphosphonium sulfonate is bonded to the above-mentioned aromatic dihydroxy compound, or a polymer, oligomer or the like containing siloxane structure and having phenolic OH groups at both ends.

Preferred polycarbonate resins used in the present invention comprise a polycarbonate resin derived from 2,2-bis(4-hydroxyphenyl)propane; and a polycarbonate copolymer derived from 2,2-bis(4-hydroxyphenyl)propane and other aromatic dihydroxy compound.

A molecular weight of the polycarbonate resin is a viscosity-average molecular weight converted from a viscosity of solution at a temperature of 25°C when using methylene chloride as a solvent, and is preferably 14,000 to 30,000, more preferably 15,000 to 28,000, and further preferably 16,000 to 26,000. When the viscosity-average molecular weight is within the above-mentioned range, mechanical strength is good and moldability is also good, which is thus preferable.

Method for preparing the polycarbonate resin is not particularly limited, and in the present invention, there can be used polycarbonate resins manufactured by any methods such as phosgene method (interfacial polymerization method) and melting method (interesterification method). In addition, in the present invention, there may be used a polycarbonate resin manufactured through a process in which an amount of end OH groups is controlled after undergoing manufacturing process by the general melting method.

Moreover, the polycarbonate resin used in the present invention may be not only a polycarbonate resin as a virgin material, but also a polycarbonate resin recycled from used products, so called a polycarbonate resin materially recycled.

As to other polycarbonate resins used in the present invention, the description of, for example, paragraphs 0018 to 0066 of JP 2012-072338 A can be referred to, which is incorporated hereto.

The resin composition of the present invention may comprise only one kind of the polycarbonate resin, or may comprise two or more kinds.

In the resin composition of the present invention, a proportion of the polycarbonate resin in the whole resin components is preferably 30 to 100% by weight, more preferably 45 to 75% by weight, and further preferably 52 to 70% by weight.

### <Styrene-based resin>

The resin composition of the present invention may comprise a styrene-based resin other than the polycarbonate resin, as resin components.

The styrene-based resin refers to at least one polymer selected from the group consisting of a styrene-based polymer comprising a styrene-based monomer; a copolymer of the styrene-based monomer and the other copolymerizable vinyl monomer; a polymer obtained by polymerizing styrene-based monomers, or by copolymerizing styrene-based monomers and other polymerizable vinyl monomers copolymerizable with the styrene-based monomer, in the presence of a rubber-like polymer. Among them, it is preferable to use the copolymer obtained by copolymerizing the styrene-based monomers or the copolymer of the styrene-based monomer and the other copolymerizable vinyl monomer, in the presence of a rubber-like polymer.

Specific examples of the styrene-based monomers include styrene, a styrene derivative such as α-methylstyrene, p-methylstyrene, divinylbenzene, ethylvinylbenzene, dimethylstyrene, p-t-butylstyrene, bromostyrene, or dibromostyrene, and among them, styrene is preferable. Meanwhile, these may be used alone or in the mixture of two or more of them.

Examples of the vinyl-based monomer copolymerizable with the above-mentioned styrene-based monomer include a vinyl cyan compound such as acrylonitrile or methacrylonitrile, an alkyl ester of acrylic acid such as methyl acrylate, ethyl acrylate, propyl acrylate, butyl acrylate, amyl acrylate, hexyl acrylate, 2-ethylhexyl acrylate, octyl acrylate or cyclohexyl acrylate, an alkyl ester of methacrylic acid such as methyl methacrylate, ethyl methacrylate, propyl methacrylate, butyl methacrylate, amyl methacrylate, hexyl methacrylate, 2-ethylhexyl methacrylate, octyl methacrylate or cyclohexyl methacrylate, an aryl ester of acrylic acid such as phenyl acrylate or benzyl acrylate, an aryl ester of methacrylic acid such as phenyl methacrylate or benzyl methacrylate, an epoxy-containing acrylic ester or metacrylic ester such as glycidyl acrylate or glycidyl methacrylate, a maleimide-based monomer such as maleimide, N,N-methyl maleimide or N-phenyl maleimide, an α,β-unsaturated carboxylic acid or acid anhydride thereof such as acrylic acid, methacrylic acid, maleic acid, maleic acid anhydride, fumaric acid or itaconic acid, and the like.

In addition, examples of the rubber-like polymer copolymerizable with the styrene-based monomer include polybutadiene, polyisoprene, styrene-butadiene random copolymer and block copolymer, acrylonitrile-butadiene random copolymer and block copolymer, acrylonitrile-butadiene copolymer, a copolymer of butadiene and an alkyl ester of acrylic acid or an alkyl ester of methacrylic acid, polybutadiene-polyisoprene diene-based copolymer, a copolymer of ethylene and an α-olefin such as ethylene-isoprene random copolymer and block copolymer or ethylene-butene random copolymer and block copolymer, a copolymer of ethylene and an α,β-unsaturated carboxylic acid ester such as ethylene-methacrylate copolymer or ethylene-butyl acrylate copolymer, ethylene-vinyl acetate copolymer, an ethylene-propylene-unconjugated diene terpolymer such as ethylene-propylene-hexadiene copolymer, acryl rubber, a composite rubber composed of polyorganosiloxane rubber and a polyalkyl acrylate or methacrylate rubber, and the like.

Examples of such styrene-based resins include, for example, polystyrene resin, high impact polystyrene resin (HIPS), acrylonitrile-styrene copolymer (AS resin), acrylonitrile-butadiene-styrene copolymer (ABS resin), methyl methacrylate-acrylonitrile-butadiene-styrene copolymer (MABS resin), acrylonitrile-styrene-acrylic rubber copolymer (ASA resin), acrylonitrile-ethylenepropylene based rubber-styrene copolymer (AES resin), styrene-methyl methacrylate copolymer (MS resin), styrene-maleic acid anhydride copolymer and the like.

Among them, preferable is acrylonitrile-styrene copolymer (AS resin), acrylonitrile-butadiene-styrene copolymer (ABS resin), acrylonitrile-styrene-acrylic rubber copolymer (ASA resin) or acrylonitrile-ethylenepropylene based rubber-styrene copolymer (AES resin), more preferable is acrylonitrile-butadiene-styrene copolymer (ABS resin), acrylonitrile-styrene-acrylic rubber copolymer (ASA resin) or acrylonitrile-ethylenepropylene based rubber-styrene copolymer (AES resin), particularly preferable is acrylonitrile-butadiene-styrene copolymer (ABS resin).

The above-mentioned styrene-based resin is prepared by a method such as emulsion polymerization, solution polymerization, mass polymerization, suspension polymerization or mass-suspension polymerization, but in the present invention, in the case of so-called styrene-based polymer, or the styrene-based random copolymer of block copolymer, a styrene-based resin prepared by mass polymerization, suspension polymerization or mass-suspension polymerization is suitable, and in the case of the styrene-based graft copolymer, a styrene-based resin prepared by mass polymerization, mass-suspension polymerization or emulsion polymerization is suitable.

In the present invention, the acrylonitrile-butadiene-styrene copolymer (ABS resin) particularly favorably used is a mixture of a thermoplastic graft copolymer prepared by grafting acrylonitirile and styrene to a butadiene rubber component, and a copolymer of acrylonitirile and styrene. The butadiene rubber component is preferably 5 to 40% by weight in 100% by weight of the ABS resin component, more preferably 10 to 35% by weight, and particularly preferably 13 to 25% by weight. In addition, the rubber particle size is preferably 0.1 to 5 µm, more preferably 0.2 to 3 µm, further preferably 0.3 to 1.5 µm, and particularly preferably 0.4 to 0.9 µm. The distribution of the rubber particle size may be any of a uniform distribution or be a plurality of distributions having two or more peaks.

The resin composition of the present invention may comprise only one kind of the styrene-based resin, or may comprise two or more kinds.

In the resin composition of the present invention, a proportion of the styrene-based resin in the whole resin components is preferably 70% by weight or less, more preferably 55% by weight or less, and further preferably 45% by weight or less. In addition, a proportion of the styrene-based resin in the whole resin components is preferably 10% by weight or more, and more preferably 30% by weight or more.

Furthermore, the resin composition of the present invention may comprise other resin component within a scope not departing the gist of the present invention. However, the other resin is preferably 5% by weight or less in the whole resin components.

In the resin composition of the present invention, the resin components is preferably 60% by weight or more of the total of the composition, more preferably 70% by weight or more.

### <Glass filler>

The resin composition of the present invention comprises a glass filler. The glass filler includes glass fiber, plate-like glass, glass beads, glass flake, and preferable is glass fiber.

The glass filler is made up of glass composition such as A glass, C glass, E glass, and S glass and particularly, the E glass (no alkaline glass) is preferable because it does not have an adverse effect on the polycarbonate resin.

The glass fiber refers to a material which has a perfect circular or polygonal cross-sectional shape cut at right angles to the longitudinal direction and has a fibrous appearance.

The glass fiber used in the resin composition of the present invention may be a monofilament or a plurality of monofilament twisted threads.

The shape of the glass fibers may be any of "glass roving" obtained by winding continuously a monofilament or a plurality of monofilament twisted threads, "chopped strand" cut at a length of 1 to 10 mm, or "milled fiber" milled to powder having a length of about 10 to 500 µm. Such glass fibers can be commercially manufactured by ASAHI FIBER GLASS Co., Ltd. as a trade name of "Glasslon Chopped Strand" or "Glasslon Milled Fiber", and can be easily obtained. The glass fibers of different shapes can also be used together.

In addition, according to the present invention, a glass fiber having an irregular cross-sectional shape is also preferable. This irregular cross-sectional profile means that, when a longer diameter and a shorter diameter of a cross section perpendicular to a fiber length are assumed to be D2 and D1, respectively, a flattening ratio represented by a ratio of longer diameter / shorter diameter (D2/D1) is, for example, preferably 1.5 to 10, more preferably 2.5 to 10, further preferably 2.5 to 8, and particularly preferably 2.5 to 5. This flat glass fiber is referred to the description of Paragraphs 0065 to 0072 of JP 2011-195820 A, which are incorporated herein.

The glass bead is a spherical bead having an outer diameter of 10 to 100 µm, and for example, is easily commercially available from Potters-Ballotini Co., Ltd. as a trade name of "EGB731". In addition, the glass flake is a scale-like one having a thickness of 1 to 20 µm and a length of one side of 0.05 to 1 mm, and for example, is easily commercially available from Nippon Sheet Glass Co., Ltd. as a trade name of "FLEKA".

As the first embodiment further enhancing a plating property of the resin composition of the present invention, there is exemplified an embodiment using a glass fiber having an average fiber length of 200 µm or less. The average fiber length of the glass fiber used in this embodiment is, from a viewpoint of enhancement of plating property, preferably 200 µm or less, more preferably 150 µm or less, and further preferably 120 µm or less. In addition, the lower limit is preferably 5 µm or more, more preferably 7 µm or more, and further preferably 15 µm or more. In addition, an average fiber diameter of the glass fiber is preferably 5 to 15 µm, more preferably 7 to 15 µm, and particularly preferably 9 to 15 µm. When the average fiber diameter is less than 5 µm, there may be a case where a moldability of the polycarbonate resin composition is impaired, and when the average fiber diameter exceeds 15 µm, there is a case where an appearance of the resin molded article is impaired and reinforcing effect is not sufficient. Meanwhile, in the present invention, the average fiber diameter is a weight average fiber diameter.

A blending amount of the glass filler in the resin composition of the present invention is 10 to 100 parts by weight, preferably 10 to 85 parts by weight, more preferably 20 to 70 parts by weight, further preferably 30 to 65 parts by weight, and particularly preferably 40 to 60 parts by weight relative to 100 parts by weight of the resin component. By blending the glass filler, the mechanical strength can be enhanced and also plating property tend to be enhanced.

The resin composition of the present invention may comprise only one kind of the glass filler, or may comprise two or more kinds. When comprising two or more of them, it is preferable that a total amount is within the above-mentioned range.

### <Sizing agent>

The glass filler to be blended with the resin composition of the present invention is preferably coated with a sizing agent. A kind of the sizing agent is not particularly defined. The sizing agent may be used only one kind or may be used in combination of two or more kinds. As the second embodiment further enhancing a plating property of the resin composition of the present invention, there is exemplified an embodiment in which at least one sizing agent selected from an epoxy-based sizing agent, an urethane-based sizing agent, a polyolefin-based sizing agent, and a silicone-based sizing agent, and more preferable sizing agent are polyolefin-based sizing agent and silicone-based sizing agent.
Such a sizing agent has a poor adhesion property to the resin component of the present invention comprising the polycarbonate resin. Therefore, in case of the resin composition comprising such a glass filler, a clearance is formed between the glass filler and the resin component, and a plating solution enters the clearance, which makes it possible to enhance the plating property.

Furthermore, in order to further enhance the plating property of the resin composition of the present invention, the first embodiment and the second embodiment may be combined.

Examples of the polyolefin resins to be used as the sizing agent according to the present embodiment include polyethylene resin, polypropylene resin, a coating agent comprising a polyolefin described in Japanese Patent No. 4880823, and the like. Among them, from the viewpoint of adhesion property, polyethylene is preferable. Examples of the silicone resins include acrylsilane resin, a coating agent comprising a polyorganosiloxane described in Japanese Patent No. 4880823, and the like. The polyolefin resin and/or the silicone resin may be formed of a single monomer or may be a copolymer formed of a plurality of different monomers.

An amount of the sizing agent in the resin composition of the present invention is preferably 0.1 to 5.0% by weight of the glass filler, more preferably 0.2 to 2.0% by weight.

### <Laser direct structuring additive>

The LDS additive used in the present invention comprises a metal oxide, in which a component of the largest blending amount among the metal components is tin, a component of the second largest blending amount is antimony, and further lead and/or copper are contained. One of Lead and copper may be contained or both of them may be contained. A preferred embodiment is an embodiment in which a metal component blended in a large amount next to antimony is lead, and a metal component blended in a large amount next to lead is copper.

The LDS additive used in the present invention refers to a compound in which a plated layer can be formed when adding 4 parts by weight of an additive to be considered as a LDS additive relative to 100 parts by weight of polycarbonate resin (Iupilon (registered trademark) S-3000F manufactured by Mitsubishi Engineering Plastics Co., Ltd.), performing irradiation with YAG laser having a wavelength of 1064 nm under output power of 10 W, frequency of 80 kHz and rate of 3 m/s, and then subjecting the laser-irradiated surface as metal, to a plating process in an electroless plating bath of M-Copper85 manufactured by MacDermid Co. , Ltd. The LDS additive to be used in the present invention may be a synthetic product or a commercially available product. Furthermore, the commercially available product may be a product being commercial product sold as a LDS additive, or may be a material which is sold for other use as long as the requirements of the LDS according to the present invention is satisfied.

The metal components contained in the LDS additive used in the present invention preferably comprises 90% by weight or more of tin, 5% by weight or more of antimony, and lead and/or copper in a very small amount, and more preferably comprises 90% by weight or more of tin, 5 to 9% by weight of antimony, lead in the range of from 0.01 to 0.1% by weight, and copper in the range of from 0.001 to 0.01% by weight.

More specifically, the LDS additive used in the present invention preferably comprises 90% by weight or more of tin oxide, 3 to 8% by weight of antimony oxide, and preferably comprises 0.01 to 0.1% by weight of lead oxide and/or 0.001 to 0.01% by weight of copper oxide. Particularly preferable embodiment is an embodiment in which a LDS additive comprising 90% by weight or more of tin oxide, 3 to 8% by weight of antimony oxide, 0.01 to 0.1% by weight of lead oxide , 0.001 to 0.01% by weight of copper oxide is used, further more preferable embodiment is an embodiment where a LDS additive comprising 93% by weight or more of tin oxide, 4 to 7% by weight of antimony oxide, 0.01 to 0.05% by weight of lead oxide , 0.001 to 0.006% by weight of copper oxide is used.

The LDS additive used in the present invention may comprise small amount of other metals other than lead and/or copper. Examples of the other metals include indium, iron, cobalt, nickel, zinc, cadmium, silver, bismuth, arsenic, manganese, chromium, magnesium, calcium, and the like. These metals may exist in the form of oxide. The content of the metals is preferably 0.001% by weight or less of the metal components contained in the LDS additive.

A particle size of the LDS additive is preferably 0.01 to 50 µm, more preferably 0.05 to 30 µm. With such a structure, the uniformity of plated surface condition when applying plating tends to be excellent.

A blending amount of the LDS additive in the resin composition of the present invention is 2 to 20 parts by weight, preferably 3 to 15 parts by weight, more preferably 5 to 12 parts by weight relative to 100 parts by weight of the resin component.

In addition, by blending a talc, a sufficient plating property can be achieved even if a blending amount of the LDS additive is adjusted to be a small amount (for example, 3 to 7 parts by weight relative to 100 parts by weight of the resin component).

The resin composition of the present invention may comprise only one kind of the LDS additive, or may comprise two or more kinds. When comprising two or more of them, it is preferable that a total amount is within the above-mentioned range.

### <Talc>

The resin composition of the present invention may comprise a talc. In the present invention, by blending the talc, plating performance at the portion irradiated with laser tends to be increased.

In addition, the talc used in the present invention is preferable to be a talc surface-treated with at least one of a compound selected from polyorganohydrogensiloxanes and organopolysiloxanes. In this case, an adhesion amount of the siloxane compound is preferably 0.1 to 5% by weight of the talc. The siloxane compound will be explained specifically in the following.

When the resin composition of the present invention contains the talc, a blending amount of the talc is preferably 1 to 30 parts by weight, and more preferably 2 to 10 parts by weight relative to 100 parts by weight of the resin component. When the talc is surface-treated, it is preferable that a total amount of the surface-treated talc is within the above-mentioned range.

### <Elastomer>

It is also preferable that the resin composition of the present invention comprises an elastomer. By blending the elastomer, an impact resistance of the resin composition can be enhanced.

The elastomer used in the present invention is preferably a graft copolymer prepared by graft-copolymerizing a rubber component with a copolymerizable monomer component. Preparation method of the graft copolymer may be any one of mass polymerization, solution polymerization, suspension polymerization, emulsion polymerization, and the like, and copolymerization system may be one-stage grafting or multi-stage grafting.

The rubber component has a glass transition temperature of usually 0°C or less, more preferably -20°C or less, further preferably -30°C or less. Specific examples of the rubber component include polybutadiene rubber, polyisoprene rubber, a polyalkyl acrylate rubber such as polybutyl acrylate, poly (2-ethylhexyl acrylate), or copolymer of butyl acrylate and 2-ethylhexyl acrylate, a silicone-based rubber such as polyorganosiloxane rubber, butadiene-acryl composite rubber, IPN (Interpenetrating Polymer Network) type composite rubber composed of polyorganosiloxane rubber and polyalkyl acrylate rubber, styrene-butadiene rubber, an ethylene-a-olefin-based rubber such as ethylene-propylene rubber, ethylene-butene rubber or ethylene-octene rubber, ethylene-acryl rubber, fluororubber, and the like. These may be used alone or in combination of two or more of them. Among them, from the viewpoint of mechanical properties and surface appearance, preferable are polybutadiene rubber, polyalkyl acrylate rubber, polyorganosiloxane rubber, IPN type composite rubber composed of polyorganosiloxane rubber and polyalkyl acrylate rubber, styrene-butadiene rubber.

Specific examples of the monomer component graft-copolymerizable with the rubber component include an aromatic vinyl compound, a vinyl cyanide compound, an ester compound of (meth) acrylic acid, a (meth) acrylic acid compound, an ester compound of an epoxy-containing (meth)acrylic acid such as glycidyl (meth)acrylate; a maleimide compound such as maleimide, N-methylmaleimide, or N-phenylmaleimide; an α,β-unsaturated carboxylic acid compound such as maleic acid, phthalic acid, or itaconic acid, and an acid anhydride thereof (for example maleic acid anhydride, and the like), and the like. These monomers may be used alone or in combination of two or more of them. Among them, from the viewpoint of mechanical properties and surface appearance, preferable are an aromatic vinyl compound, a vinyl cyanide compound, an ester compound of (meth)acrylic acid, a (meth)acrylic acid compound, and more preferable is an ester compound of (meth)acrylic acid. Specific examples of the ester compound of (meth)acrylic acid include methyl (meth)acrylate, ethyl (meth)acrylate, butyl (meth)acrylate, cyclohexyl (meth)acrylate, octyl (meth)acrylate, and the like.

In view of impact resistance and surface appearance, the graft copolymer which is copolymerized with the rubber component is preferably a core/shell type graft copolymer. Among them, particularly preferable is a core/shell type graft copolymer which is composed of a core layer of at least one of the rubber component selected from polybutadiene-containing rubber, polybutyl acrylate-containing rubber, polyorganosiloxane rubber and IPN type composite rubber composed of polyorganosiloxane rubber and polyalkyl acrylate rubber, and a shell layer which is formed around the core by copolymerizing a (meth)acrylic acid ester. In the above-mentioned core/shell type graft copolymer, a content of the rubber component is preferably 40% by mass or more, more preferably 60% by mass or more. A content of the (meth) acrylic acid is preferably 10% by mass or more. In the present invention, the core/shell type is not necessary to exactly distinguish the core layer from the shell layer, and has a concept that includes compounds obtainable by graft-polymerizing the rubber component around the core portion.

Preferable examples of the core/shell type graft copolymer include methyl methacrylate-butadiene-styrene copolymer (MBS), methyl methacrylate-acrylonitrile-butadiene-styrene copolymer (MABS), methyl methacrylate-butadiene copolymer (MB), methyl methacrylate-acryl rubber copolymer (MA), methyl methacrylate-acryl rubber-styrene copolymer (MAS), methyl methacrylate-acryl butadiene rubber copolymer, methyl methacrylate-acryl butadiene rubber-styrene copolymer, methyl methacrylate-(acryl silicone IPN rubber) copolymer, and the like. These rubber-like polymers may be used alone or in combination of two or more of them.

Examples of the elastomer include, for instance, "PARALOID (registered trademark, hereinafter the same) EXL2602", "PARALOID EXL2603", "PARALOID EXL2655", "PARALOID EXL2311", "PARALOID EXL2313", "PARALOID EXL2315", "PARALOID KM330", "PARALOID KM336P", "PARALOID KCZ201" manufactured by Rohm and Haas Japan Company, "METABLEN (registered trademark, hereinafter the same) C-223A", "METABLEN E-901", "METABLEN S-2001", "METABLEN SRK-200" manufactured by MITSUBISHI RAYON Co., Ltd., KANEACE (registered trademark, hereinafter the same) M-511, "KANEACE M-600", "KANEACE M-400", "KANEACE M-580", "KANEACE M-711", "KANEACE MR-01" manufactured by KANEKA CORPORATION, "UBESTA XPA" manufactured by UBE INDUSTRIES LTD, and the like.

When the resin composition of the present invention contains an elastomer, a blending amount of the elastomer is 1 to 20 parts by weight, preferably 1 to 15 parts by weight, more preferably 3 to 10 parts by weight relative to 100 parts by weight of the resin component.

The resin composition of the present invention may comprise only one kind of the elastomer, or may comprise two or more kinds. When comprising two or more of them, it is preferable that a total amount is within the above-mentioned range.

### <White pigment>

The resin composition of the present invention may comprise a white pigment. In the present invention, by adding the white pigment, coloring of the resin-molded article can be achieved. Examples of the white pigments include ZnS, ZnO, titanium oxide, and preferable are zinc sulfide and titanium oxide.

The titanium oxide is preferably one which contains titanium oxide in an amount of 80% by weight or more among commercially available ones in view of whiteness and covering property. Examples of the titanium oxide used in the present invention include titanium monoxide (TiO), dititanium trioxide (Ti₂O₃), titanium dioxide (TiO₂), and the like, and any of them can be used, preferable is titanium dioxide. As the titanium oxide, there may be used one having the rutile type crystalline structure.

An average primary particle size of the white pigment is preferably 1 µm or less, more preferably within a range of from 0.001 to 0.5 µm, further preferably within a range of from 0. 002 to 0.1 µm. By controlling the average particle size of the white pigment within such a range and an amount thereof within the following range, it is possible to obtain a resin composition which produces a molded article having a high whiteness and high surface reflectance.

When using an inorganic pigment as the white pigment, a surface-treated pigment may be used. The white pigment used in the present invention is preferably a white pigment which is surface-treated with at least one of the siloxane compound. In the case, an adhesion amount of the siloxane compound is preferably 0 . 1 to 5% by weight of the white pigment. As to the siloxane compound, the explanation of the above-mentioned polyorganohydrogensiloxanes and organopolysiloxanes can be referred to, and the preferred ranges are also the same.

As a preferred embodiment of the present invention, there is exemplified a formulation using a titanium oxide surface-treated with at least one kind selected from polyorganohydrogensiloxanes and organopolysiloxanes.

As the white pigment, commercially available pigments can be used. Furthermore, it may be possible to use one obtained by grinding appropriately a massive pigment or a pigment with large average particle size, and classifying the pigment with a sieve or the like, if necessary, so as to be within the above-mentioned average particle size

When the resin composition of the present invention comprises the white pigment, a blending amount of the white pigment is preferably 0.1 to 10 parts by weight, more preferably 1 to 8 parts by weight, and further preferably 2 to 5 parts by weight relative to 100 parts by weight of the resin component.

The polycarbonate resin composition of the present invention may comprise only one kind of the white pigment, or may comprise two or more kinds. When comprising two or more of them, it is preferable that a total amount is within the above-mentioned range.

### <Phosphorus-based stabilizer>

The resin composition of the present invention preferably comprises a phosphorus-based stabilizer.

As the phosphorus-based stabilizer, a phosphoric acid ester and a phosphorous acid ester are preferable.

As the phosphoric acid ester, the compound represented by the following general formula (3) is preferable.
General formula (3)

O=P(OH)ₘ(OR) ₃₋ₘ (3)

in the general formula (3), R is an alkyl group or an aryl group, and may be the same or different. m is an integer of 0 to 2.

R is preferably an alkyl group having 1 to 30 carbon atoms or an aryl group having 6 to 30 carbon atoms, R is preferably an alkyl group having 1 to 30 carbon atoms or an aryl group having 6 to 30 carbon atoms, and more preferable are an alkyl group having 2 to 25 carbon atoms, phenyl group, nonylphenyl group, stearylphenyl group, 2,4-di-tert-butylpheny group, 2,4-di-tert-butylmethylphenyl group, tolyl group.

Examples of the phosphoric acid esters include trimethyl phosphate, triethyl phosphate, tributyl phosphate, trioctyl phosphate, triphenyl phosphate, tricresyl phosphate, tris(nonylphenyl) phosphate, 2-ethylphenyl diphenyl phosphate, tetrakis(2,4-di-tert-butylphenyl)-4,4-diphenylenephosphonit e and the like.

As the phosphorous acid ester, the compound represented by the following general formula (4) is preferable.

### General formula (4)

### (Compound 1)

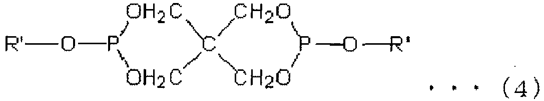

in the general formula (4), R' is an alkyl group or an aryl group, and each may be the same or different.

R' is preferably an alkyl group having 1 to 25 carbon atoms, or an aryl group having 6 to 12 carbon atoms. When R' is an alkyl group, an alkyl group having 1 to 30 carbon atoms is preferable, and when R' is an aryl group, an aryl group having 6 to 30 carbon atoms is preferable.

Examples of the phosphorous acid esters include a triester, a diester, or a monoester of phosphorous acid such as triphenyl phosphite, trisnonylphenyl phosphite, tris(2,4-di-tert-butylphenyl) phosphite, trinonyl phosphite, tridecyl phosphite, trioctyl phosphite, trioctadecyl phosphite, distearylpentaerythritol diphosphite, tricyclohexyl phosphite, monobutyldiphenyl phosphite, monooctyldiphenyl phosphite, bis(2,4-di-tert-butylphenyl)pentaerythritol phosphite, bis(2,6-di-tert-4-methylphenyl)pentaerythritol phosphite, 2, 2-methylenebis (4,6-di-tert-butylphenyl)octyl phosphite and the like.

When the resin composition of the present invention comprises the phosphorus-based stabilizer, a blending amount of the phosphorus-based stabilizer is 0.01 to 5 parts by weight, and more preferably 0.02 to 2 parts by weight relative to 100 parts by weight of the resin component.

The resin composition of the present invention may comprise only one kind of the phosphorus-based stabilizer, or may comprise two or more kinds. When comprising two or more of them, it is preferable that a total amount is within the above-mentioned range.

### <Antioxidant>

The resin composition of the present invention may comprise an antioxidant. The antioxidant is preferably a phenol-based antioxidant, and includes more specifically, 2,6-di-t-butyl-4-methylphenol, n-octadecyl-3-(3',5'-di-t-butyl-4'-hydroxyphenyl) propionate, tetrakis[methylene-3-(3,5-di-t-butyl-4-hydroxyphenyl) propionate]methane, tris(3,5-di-t-butyl-4-hydroxybenzyl) isocyanurate, 4,4'-butylydenebis-(3-methyl-6-t-butylphenol), triethylene glycol-bis[3-(3-t-butyl-hydroxy-5-methylphenyl) propionate, and 3,9-bis{2-[3-(3-t-butyl-4-hydroxy-5-methylphenyl)propionylo xy]-1,1-dimethylethyl}-2,4,8,10-tetraoxaspiro[5.5]undecane, etc. Among them, preferable is tetrakis[methylene-3-(3,5-di-t-butyl-4-hydroxyphenyl) propionate]methane.

When the resin composition of the present invention comprises the antioxidant, a blending amount of the antioxidant is 0.1 to 5 parts by weight, and more preferably 0.05 to 3 parts by weight relative to 100 parts by weight of the resin component.

The resin composition of the present invention may comprise only one kind of the antioxidant, or may comprise two or more kinds. When comprising two or more of them, it is preferable that a total amount is within the above-mentioned range.

### <Mold-releasing agent>

The resin composition of the present invention may comprise a mold-releasing agent. The mold-releasing agent is preferably at least one compound selected from an aliphatic carboxylic acid, an aliphatic carboxylic acid ester, and an aliphatic hydrocarbon compound having a number-average-molecular weight of 200 to 15000. Among them, at least one compound selected from the aliphatic carboxylic acid and the aliphatic carboxylic acid ester is more preferably used.

Specific examples of the aliphatic carboxylic acids include a saturated or unsaturated aliphatic mono-carboxylic acid, di-carboxylic acid or tri-carboxylic acid. In the present description, the term of the aliphatic carboxylic acid is used to encompass an alicyclic carboxylic acid. Among the aliphatic carboxylic acids, preferable is a mono- or di-carboxylic acid having 6 to 36 carbon atoms, more preferable is aliphatic saturated mono-carboxylic acid having 6 to 36 carbon atoms. Specific examples of such aliphatic carboxylic acids include palmitic acid, stearic acid, valeric acid, caproic acid, capric acid, lauric acid, arachic acid, behenic acid, lignoceric acid, cerotic acid, melissic acid, tetratriacontanoic acid, montanoic acid, glutaric acid, adipic acid, azelaic acid and the like.

As an aliphatic carboxylic acid component constituting the aliphatic carboxylic acid ester, there can be used the same aliphatic carboxylic acid as mentioned above. In contrast, as an alcohol component constituting the aliphatic carboxylic acid ester, there can be used a saturated or unsaturated mono-alcohol, a saturated or unsaturated polyhydric alcohol and the like. These alcohols may have a substituent such as a fluorine atom or an aryl group. Among these alcohols, preferable is a saturated mono- or polyhydric alcohol having 30 or less carbon atoms, and more preferable is a saturated aliphatic mono-alcohol or polyhydric-alcohol having 30 or less carbon atoms. Here, the aliphatic alcohol also includes an alicyclic alcohol. Specific examples of the alcohols include octanol, decanol, dodecanol, stearyl alcohol, behenyl alcohol, ethylene glycol, diethylene glycol, glycerin, pentaerythritol, 2,2-dihydroxy-perfluoropropanol, neopentylene glycol, ditrimethylolpropane, dipentaerythritol and the like. These aliphatic carboxylic acid esters may contain an aliphatic carboxylic acid and/or alcohol as a contaminant, and may be a mixture of a plurality of compounds. Specific examples of the aliphatic carboxylic acid esters include beeswax (mixture containing myricyl palmitate as a main component), stearyl stearate, behenyl behenate, octyldodecyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, pentaerythritol tetrastearate and the like.

When the resin composition of the present invention comprises the mold-releasing agent, a blending amount of the mold-releasing agent is 0.01 to 5 parts by weight, and more preferably 0.05 to 3 parts by weight relative to 100 parts by weight of the resin component.

The resin composition of the present invention may comprise only one kind of the mold-releasing agent, or may comprise two or more kinds. When comprising two or more of them, it is preferable that a total amount is within the above-mentioned range.

The resin composition of the present invention may comprise other components within the scope not departing from the gist of the present invention. Examples of the other components include stabilizers other than the phosphorus-based stabilizer, ultraviolet absorbents, flame retardants, glass filler and inorganic filler other than talc, fluorescent whiteners, antidripping agents, antistatic agents, anticlouding agents, lubricants, antiblocking agents, flowability-improving agents, plasticizers, dispersing agents, antibacterial agents and the like. Two or more of these may be used together.

As to these components, the description of, for example, JP-A-2007-314766, JP-A-2008-127485, JP-A-2009-51989, and JP-A -2012-72338 and the like can be referred to, which are incorporated herein.

The method for preparing the polycarbonate resin composition of the present invention is not particularly defined, and known preparation methods of thermoplastic resin composition can be employed widely. Specifically, the resin composition can be prepared by previously mixing each component through the use of various mixers such as tumbler mixer, Henschel mixer, and then melt-molding with Banbury mixer, roll, Brabender, uniaxial kneading extruder, twin screw kneading extruder, kneader and the like.

Alternatively, for example, the resin composition of the present invention can be prepared by supplying through a feeder to an extruder without pre-mixing of each component or with pre-mixing of partial components, and melt-kneading.

Furthermore, for example, the resin composition of the present invention can also be prepared by pre-mixing a part of the components, supplying it to an extruder, performing melt-kneading to thereby obtain a resin composition that is set as a master batch, mixing again the master batch with the remaining components, and then performing melt-kneading.

The method for manufacturing the resin-molded article from the resin composition of the present invention is not particularly limited, and there can be employed molding method generally used in thermoplastic resins such as, namely, usual injection molding, super high speed injection molding, injection compression molding, two color molding, blow molding including gas-assist, molding by using a heat insulating die, molding by using a rapid heating die, foam molding (including supercritical fluid), insert molding, IMC (in-mold coating molding) molding, extrusion molding, sheet molding, heat molding, rotation molding, laminate molding, and press molding. In addition, there can be selected a molding method using hot-runner system.

Next, a process of providing a plated layer on the surface of the resin-molded article obtained by molding the resin composition of the present invention will be explained according to Fig. 1. Fig. 1 shows a schematic view of a process of forming a plated layer on a surface of a resin-molded article 1 by laser direct structuring technique. In Fig. 1, although the resin-molded article 1 is a flat substrate, the resin-molded article is not necessarily such a flat substrate, and may be partially or totally curved. The resin-molded article comprises not only final products but also various parts. The resin-molded article of the present invention is preferably a mobile electronic device part. The mobile electronic device parts have high impact resistance and rigidity together with excellent heat resistance, and have features of low anisotropy and low warpage, and thus, are extremely suitable for inside components and casing of PDA such as electronic organizer or portable computer; beeper; cellular phone; PHS; and the like. Particularly suitable is a flat plate-like mobile electronic device part having an average thickness excluding rib of 1.2 mm or less (lower limit is not particularly defined and, for example 0. 4 mm or more), and among them, most suitable is the casing.

Returning to Fig. 1 again, the resin-molded article 1 is irradiated with laser 2. The laser herein is not particularly defined, and can be appropriately selected from known lasers such as YAG laser, excimer laser, electromagnetic radiations, and preferable is YAG laser. Moreover, a wavelength of the laser is not particularly defined. Preferred wavelength range is 200 nm to 1200 nm. Particularly preferable is 800 nm to 1200 nm.

When irradiated with laser, the resin-molded article 1 is activated at only the portion 3 irradiated with the laser. Under this activated condition, the resin-molded article 1 is applied to a plating solution 4. The plating solution 4 is not particularly defined, and known plating solutions can be employed widely, and, as a metal component, a component in which copper, nickel, gold, silver, or palladium is mixed is preferable, and a component in which copper is mixed is more preferable.

The method for applying the resin-molded article 1 to the plating solution 4 is not particularly defined, and, for example, there is a method for throwing the resin-molded article 1 into a liquid with which the plating solution 4 is blended. With respect to the resin-molded article after applying the plating solution, a plated layer 5 is formed only on the portion irradiated with the laser.

According to the method of the present invention, circuit lines having an interval width of 1 mm or less, further 150 µm or less (lower limit is not particularly defined and is, for example, 30 µm or more) can be formed. Such a circuit is preferably used as an antenna of mobile electronic device parts. Namely, one preferred embodiment of the resin-molded article of the present invention is a resin-molded article in which a plated layer provided on the surface of mobile electronic device parts has performance as an antenna.

### [Example]

Hereinafter, the present invention will be more specifically explained by referring to Examples. Materials, amounts to be used, proportions, contents of treatment, procedures for treatment and the like described in the following Examples can be appropriately changed within a scope not departing the gist of the present invention. Accordingly, the scope of the present invention is not limited by the following specific examples.

### <Resin component>

S-3000F: Polycarbonate resin manufactured by Mitsubishi Engineering-Plastics Corporation
AT-08: ABS resin manufactured by NIPPON A&L Inc.

### <Glass filler>

MF-S-R: Milled fiber with an average fiber diameter of 10 µm, an average fiber length of 110 µm, surface-treated with a phosphorous acid, manufactured by ASAHI FIBER GLASS Co., Ltd. MF06-JB1: Milled fiber with an average fiber diameter of 10 µm, an average fiber length of 70 µm, no surface-treated, manufactured by ASAHI FIBER GLASS Co., Ltd.
PFE301S: Milled fiber with an average fiber diameter of 10 µm, an average fiber length of 30 µm, surface-treated with acrylsilane, manufactured by Nitto Boseki Co., Ltd.
T-571: Chopped strand with 13 µm diameter, and use of an urethane resin as a sizing agent, manufactured by Nippon Electric Glass Co., Ltd.
T-595: Chopped strand with an average fiber diameter of 13 µm, an average fiber length of 3 mm, and use of a silicone resin as a sizing agent, manufactured by Nippon Electric Glass Co., Ltd.
3PE-936: Chopped strand with an average fiber diameter of 13 µm, an average fiber length of 3 mm, and use of polyethylene resin as a sizing agent, manufactured by Nitto Boseki Co. , Ltd. ECS307NA: Chopped strand with an average fiber diameter of 13 µm, an average fiber length of 3 mm, and use of polyethylene resin as a sizing agent, manufactured by CPIC Company.

### <LDS additive>

CP5C: Comprising antimony-doped tin oxide (tin oxide 95% by weight, antimony oxide 5% by weight, lead oxide 0.02% by weight, copper oxide 0.004% by weight) manufactured by Keeling & Walker STOX-M: Comprising a mixture of antimony trioxide (antimony oxide 99.1% by weight, organosiloxane 0.5% by weight, lead oxide 0.05% by weight, cyan oxide 0.05% by weight) manufactured by NIHON SEIKO CO., LTD.
T-1: Comprising antimony-doped tin oxide (tin oxide 90.1% by weight, antimony oxide 9.9% by weight) manufactured by MITSUBISHI Material Corporation

### <Talc>

5000S: Hayashi-kasei co., jp

### <Elastomer>

KANEACE M-711: Core/shell type elastomer including butadiene-based core and acrylic shell manufactured by KANEKA CORPORATION

### <White pigment>

Titanium oxide treated with methylhydrogenesiloxane manufactured by RESINO COLOR INDUSTRIES CO., LTD.,

### <Phosphorus-based stabilizer>

ADEKA Stub PEP-36: Bis(2,6-di-tert-butyl-4-methylphenyl)pentaerythritol diphosphite manufactured by ADEKA CORPORATION ADEKA Stub AX71: Mixture of approximately equal mole of (mono- and di-stearic acid phosphate) manufactured by ADEKA CORPORATION
ADEKA Stub PEP-8: (Cyclic neopentanetetrayl bis(octadecyl phosphite)) manufactured by ADEKA CORPORATION ADEKA Stub ADK2112: Tris(2,4-di-tert-butylphenyl)phosphite manufactured by ADEKA CORPORATION

### <Antioxidant>

Irganox 1076:
Octadecyl-3-(3,5-di-tert-butyl-4-hydroxyphenyl) propionate manufactured by BASF

### <Mold-releasing agent>

VPG861: Pentaerythritol tetrastearate manufactured by Cognis Oleo Chemicals Japan

### <Compound>

After weighting each component according to the formulations mentioned in the following Tables, and mixing with a tumbler for 20 minutes, the mixture was supplied to (TEX30HSST) with one bent manufactured by The Japan Steel Works, LTD. , to knead under the conditions of a screw rotational speed of 200 rpm, discharge of 20 kg/hr, a barrel temperature of 300°C, and the molten resin extruded in the form of strand was cooled rapidly in a water tank, and then pelletized by using a pelletizer to obtain pellets of the resin composition.

### <Preparation of test piece-ISO dumbbell test piece>

After drying, at 120°C for 5 hours, the pellets obtained by the above-mentioned preparation method, injection-molding was performed for the formation of ISO dumbbell test pieces having 4 mmt and 3 mmt, under the conditions of a cylinder temperature of 300°C, a die temperature of 100°C, a molding cycle of 50 seconds through the use of SG75-MII manufactured by Nissei Plastic Industrial Co., Ltd.

### <Preparation of test piece - two-stage plate of 2 mmt/3 mmt >

After drying, at 120°C for 5 hours, the pellets obtained by the above-mentioned preparation method, injection-molding was performed for the formation of a two-stage plate of 2 mmt/3 mmt, under the conditions of a cylinder temperature of 300°C, a die temperature of 100°C, a molding cycle of 30 seconds through the use of J-50 manufactured by Nissei Plastic Industrial Co. , Ltd.

### <Charpy impact strength>

In accordance with IS0179, through the use of the ISO dumbbell test piece having 3 mmt obtained by the above-mentioned method, a charpy impact strength with notches was measured under 23°C. The results are shown in the following Tables.

### <Plating property (LDS activity)-Plating Index>

The laser irradiation of the surface of the two-stage plate of 2 mmt/3 mmt was performed by using YAG laser having a wavelength of 1064 nm under the condition of output power of 10 W, frequency of 80 kHz and rate of 3 m/s, and then the surface was subjected to electroless plating in a plating bath of M-Copper85 manufactured by MacDermid Co., Ltd. The LDS activity was evaluated depending on a thickness of the copper plaited layer, when the thickness of an electroless plating of the standard material is 1.0.

### <Dielectric constant and dielectric tangent>

A molded article of 100 mm square, 1 mm thickness was prepared through the use of an injection molding machine NEX80 manufactured by Nissei Plastic Industrial Co., Ltd. through a fine gate die. Test pieces of 1 mm x 1 mm x 100 mm were produced from the molded article in the flowing direction of resin (parallel) and in the direction perpendicular to the flowing direction of resin (perpendicularity).

These test pieces were subjected to measurement of dielectric constant and dielectric tangent at 2.45 GHz through the use of a cylindrical cavity resonator manufactured by Kanto Electric Application and Development Inc.

### <Hue-gray lightness>

Through the use of a gray scale no-gloss plate manufactured by Mansell, lightness was measured by using a scale of W (white) to BK (black). Gray lightness was shown as the index of white.

### <Decomposition-MVR>

After drying the resin composition pellets obtained above at 100°C for 4 to 8 hours, a melt volume rate (MVR) was measured through the use of MELTINDEXER RF-F01 manufactured by TOYO SEIKI KOGYO CO., LTD. under a measuring temperature of 270°C, a load of 5 kgf. It can be said that the higher the MVR value is, the more the decomposition proceeds.

### <Decomposition-Post heat-aging MVR>

After storing the resin composition pellets obtained above at 100 °C for one week, a melt volume rate (MVR) was measured through the use of MELTINDEXERF-F01 manufactured by TOYO SEIKI KOGYO CO., LTD. under a measuring temperature of 270°C, a load of 5 kgf. It can be said that the higher the MVR value is, the more the decomposition proceeds.

### <Decomposition-Moist-heat test MVR>

After storing the resin composition pellets obtained above under the circumstance of 80°C, 95% relative humidity (RH) for one week, a melt volume rate (MVR) was measured through the use of MELTINDEXERF-F01 manufactured by TOYO SEIKI KOGYO CO., LTD. under a measuring temperature of 270°C, a load of 5 kgf. It can be said that the higher the MVR value is, the more the decomposition proceeds.

The results are shown in the following Tables. In the Tables, the blending amount is represented by parts by weight.

**Table 1**

| Kind | Name | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| PC | S-3000F | 100 | 100 | 100 | 60 | 60 | 60 | 60 | 60 | 60 | 60 | 60 |
| ABS | AT-08 | | | | 40 | 40 | 40 | 40 | 40 | 40 | 40 | 40 |
| Glass filler | MF-S-R | 11 | 25 | 43 | 11 | 25 | 43 | | | 43 | 43 | 43 |
| | MF06-JB1 | | | | | | | 43 | | | | |
| | PFE301S | | | | | | | | 43 | | | |
| | T-571 | | | | | | | | | | | |
| LDS Additive | CP5C | 4 | 4 | 4 | 4 | 4 | 4 | 4 | 4 | 4 | 8 | 4 |
| | STOX-M | | | | | | | | | | | |
| | T-1 | | | | | | | | | | | |
| Talc | 5000s | | | | | | | | | 5 | | |
| Elastomer | M711 | 5 | 5 | 5 | 5 | 5 | 5 | 5 | 5 | 5 | 5 | 5 |
| White Pigment | Titanium oxide treated with methylhydroge nesiloxane | 3 | 3 | 3 | 3 | 3 | 3 | 3 | 3 | 3 | 3 | 3 |
| Phosphorus-based stabilizer | PEP-36 | 0.05 | 0.05 | 0.05 | 0.05 | 0.05 | 0.05 | 0.05 | 0.05 | 0.05 | 0.05 | |
| | AX71 | | | | | | | | | | | 0.05 |
| | PEP-8 | | | | | | | | | | | |
| | ADK2112 | | | | | | | | | | | |
| Antioxidant | Irganox1076 | 0.1 | 0.1 | 0.1 | 0.1 | 0.1 | 0.1 | 0.1 | 0.1 | 0.1 | 0.1 | 0.1 |
| Mold-releasing agent | VPG861 | 0.3 | 0.3 | 0.3 | 0.3 | 0.3 | 0.3 | 0.3 | 0.3 | 0.3 | 0.3 | 0.3 |
| Mechanical property | Charpy impact strength | 10 | 13 | 15 | 9 | 11 | 12 | 12 | 11 | 7 | 13 | 11 |
| Plating property | Plating Index | 0.6 | 0.65 | 0.7 | 0.7 | 0.75 | 0.8 | 0.8 | 0.85 | 0.9 | 0.9 | 0.8 |
| Dielectric constant 2.45GHz | Paralell | 2.8 | 2.98 | 3.16 | 2.78 | 2.96 | 3.14 | 3.14 | 3.14 | 3.16 | 3.26 | 3.14 |
| | Perpendicularity | 2.8 | 2.98 | 3.16 | 2.78 | 2.96 | 3.14 | 3.14 | 3.14 | 3.16 | 3.26 | 3.14 |
| Dielectrictangent 2.45GHz | Parallel | 0.006 | 0.007 | 0.008 | 0.006 | 0.007 | 0.008 | 0.008 | 0.008 | 0.008 | 0.009 | 0.008 |
| | perpendicularity | 0.006 | 0.007 | 0.008 | 0.006 | 0.007 | 0.008 | 0.008 | 0.008 | 0.008 | 0.009 | 0.008 |
| Hue | Gray lightness | 8 | 8 | 8 | 8 | 8 | 8 | 8 | 8 | 8 | 7.5 | 8 |
| Decomposition | MVR | 16 | 14 | 12 | 25 | 22 | 18 | 20 | 22 | 22 | 22 | 18 |
| | Post heat-aging MVR | 18 | 16 | 14 | 27 | 24 | 20 | 22 | 24 | 25 | 24 | 19 |
| | Moist-heat test MVR | 19 | 17 | 15 | 28 | 25 | 21 | 26 | 25 | 28 | 25 | 20 |

**Table 2**

| Kind | Name | Example 12 | Example 13 | Example 14 | Example 15 | Example 16 | Comp. Exam ple 1 | Comp. Example 2 | Comp. Example 3 | Comp. Example 4 | Com p. Example 5 | Comp. Example 6 |
|---|---|---|---|---|---|---|---|---|---|---|---|---|
| PC | S-3000F | 60 | 60 | 60 | 60 | 60 | 100 | 100 | 60 | 60 | 60 | 60 |
| ABS | AT-08 | 40 | 40 | 40 | 40 | 40 | | | 40 | 40 | 40 | 40 |
| Glass filler | MF-S-R | 43 | 43 | 43 | 43 | | | | | | 43 | 43 |
| | MF06-JB1 | | | | | | | | | | | |
| | PFE301S | | | | | | | | | | | |
| | T-571 | | | | | 25 | 25 | 25 | 25 | 25 | | |
| LDS Additive | CP5C | 4 | 4 | 4 | 4 | 4 | | | | | | |
| | STOX-M | | | | | | 4 | | 4 | | | 4 |
| | T-1 | | | | | | | 4 | | 4 | 4 | |
| Talc | 5000s | | | | | | | | | | | |
| Elastomer | M711 | 5 | 5 | 5 | 5 | 5 | 5 | 5 | 5 | 5 | 5 | 5 |
| White Pigment | Titanium oxide treated with methylhydrogenesiloxane | 3 | 3 | 3 | 3 | 3 | 3 | 3 | 3 | 3 | 3 | 3 |
| Phosphorus-based stabilizer | PEP-36 | | | | | 0.05 | 0.05 | 0.05 | 0.05 | 0.05 | 0.05 | 0.05 |
| | AX71 | | | | | | | | | | | |
| | PEP-8 | 0.05 | | | | | | | | | | |
| | ADK2112 | | | | 0.05 | | | | | | | |
| Antioxidant | Irganox1076 | 0.1 | | 0.1 | 0.1 | 0.1 | 0.1 | 0.1 | 0.1 | 0.1 | 0.1 | 0.1 |
| Mold-releasing agent | VPG861 | 0.3 | 0.3 | 0.3 | 0.3 | 0.3 | 0.3 | 0.3 | 0.3 | 0.3 | 0.3 | 0.3 |
| Mechanical property | Charpyimpactstrength | 12 | 12 | 12 | 12 | 8 | 10 | 10 | 8 | 8 | 12 | 12 |
| Plating property | Plating Index | 0.8 | 0.8 | 0.8 | 0.8 | 0.5 | 0.1 | 0.1 | 0.1 | 0.1 | 0.2 | 0.2 |
| Dielectric constant 2.45GHz | Paralell | 3.14 | 3.14 | 3.14 | 3.14 | 3.25 | 3.5 | 3.03 | 3.5 | 3.03 | 3.33 | 2.96 |
| | Perpendicularity | 3.14 | 3.14 | 3.14 | 3.14 | 3.1 | 3.36 | 2.89 | 3.36 | 2.89 | 3.33 | 2.96 |
| Dielectric tangent 2.45GHz | Parallel | 0.008 | 0.008 | 0.008 | 0.008 | 0.01 | 0.011 | 0.008 | 0.011 | 0.008 | 0.008 | 0.011 |
| | perpendicularity | 0.008 | 0.008 | 0.008 | 0.008 | 0.01 | 0.011 | 0.008 | 0.011 | 0.008 | 0.008 | 0.011 |
| Hue | Gray lightness | 8 | 8 | 8 | 8 | 8 | 5 | 4 | 5 | 4 | 4 | 5 |
| Decomposition | MVR | 18 | 22 | 22 | 20 | 13 | 15 | 15 | 23 | 24 | 26 | 24 |
| | Post heat-aging MVR | 20 | 35 | 33 | 30 | 15 | 17 | 17 | 25 | 25 | 27 | 26 |
| | Moist-heat test MVR | 22 | 40 | 40 | 35 | 17 | 18 | 18 | 26 | 26 | 28 | 27 |

**Table 3**

| Kind | Name | Example 17 | Example 18 | Example 19 | Example 20 | Example 21 | Example 22 | Example 23 |
|---|---|---|---|---|---|---|---|---|
| PC | S-3000F | 100 | 100 | 100 | 60 | 60 | 60 | 60 |
| ABS | AT-08 | | | | 40 | 40 | 40 | 40 |
| Galss filler | T-595 | 11 | 25 | 43 | 11 | 25 | 43 | |
| | 3PE-936 | | | | | | | 43 |
| | ECS307NA | | | | | | | |
| LDS additive | CP5C | 4 | 4 | 4 | 4 | 4 | 4 | 4 |
| | W-1 | | | | | | | |
| | STOX-M | | | | | | | |
| | T-1 | | | | | | | |
| Talc | 5000s | | | | | | | |
| Elastomer | M711 | 5 | 5 | 5 | 5 | 5 | 5 | 5 |
| White Pigment | Titanium oxide treated with methylhydrogenesiloxane | 3 | 3 | 3 | 3 | 3 | 3 | 3 |
| Phosphorus-based stabilizer | PEP-36 | 0.05 | 0.05 | 0.05 | 0.05 | 0.05 | 0.05 | 0.05 |
| | AX71 | | | | | | | |
| | PEP-8 | | | | | | | |
| | ADK2112 | | | | | | | |
| Antioxidant | Irganox1076 | 0.1 | 0.1 | 0.1 | 0.1 | 0.1 | 0.1 | 0.1 |
| Mold-releasing agent | VPG861 | 0.3 | 0.3 | 0.3 | 0.3 | 0.3 | 0.3 | 0.3 |
| Mechanical property | Charpy im pact strength | 35 | 30 | 20 | 29 | 20 | 13 | 13 |
| Plating property | Plating Index | 0.7 | 0.8 | 0.85 | 0.8 | 0.85 | 0.9 | 0.9 |
| Hue | Gray lightness | 8 | 8 | 8 | 8 | 8 | 8 | 8 |
| Decomposition | MVR | 16 | 14 | 12 | 26 | 18 | 13 | 13 |
| | Post heat-aging MVR | 18 | 16 | 14 | 28 | 20 | 15 | 15 |
| | Moist-heat test MVR | 19 | 17 | 15 | 29 | 21 | 16 | 16 |

**Table 4**

| Kind | Name | Example 24 | Example 25 | Example 26 | Example 27 | Example 28 | Example 29 | Example 30 | Example 31 |
|---|---|---|---|---|---|---|---|---|---|
| PC | S-3000F | 60 | 60 | 60 | 60 | 60 | 60 | 60 | 60 |
| ABS | AT-08 | 40 | 40 | 40 | 40 | 40 | 40 | 40 | 40 |
| Galss filler | T-595 | | 43 | 43 | 43 | 43 | 43 | 43 | 43 |
| | 3PE-936 | | | | | | | | |
| | ECS307NA | 43 | | | | | | | |
| LDS additive | CP5C | 4 | 4 | 8 | 4 | 4 | 4 | 4 | 4 |
| | W-1 | | | | | | | | |
| | STOX-M | | | | | | | | |
| | T-1 | | | | | | | | |
| Talc | 5000s | | 5 | | | | | | |
| Elastomer | M711 | 5 | 5 | 5 | 5 | 5 | 5 | 5 | 5 |
| White Pigment | Titanium oxide treated with methylhydrogenesiloxane | 3 | 3 | 3 | 3 | 3 | 3 | 3 | 3 |
| Phosphorus-based stabilizer | PEP-36 | 0.05 | 0.05 | 0.05 | | | | | |
| | AX71 | | | | 0.05 | | | | |
| | PEP-8 | | | | | 0.05 | | | |
| | ADK2112 | | | | | | | | 0.05 |
| Antioxidant | Irganox1076 | 0.1 | 0.1 | 0.1 | 0.1 | 0.1 | | 0.1 | 0.1 |
| Mold-releasing agent | VPG861 | 0.3 | 0.3 | 0.3 | 0.3 | 0.3 | 0.3 | 0.3 | 0.3 |
| Mechanical property | Charpy im pact strength | 13 | 9 | 10 | 11 | 13 | 13 | 13 | 13 |
| Plating property | Plating Index | 0.9 | 1 | 1 | 0.9 | 0.9 | 0.9 | 0.9 | 0.9 |
| Hue | Gray lightness | 8 | 8 | 7 | 8 | 8 | 8 | 8 | 8 |
| Decomposition | MVR | 13 | 15 | 15 | 13 | 13 | 15 | 14 | 14 |
| | Post heat-aging MVR | 15 | 18 | 17 | 14 | 15 | 25 | 23 | 20 |
| | Moist-heat test MVR | 16 | 20 | 20 | 15 | 16 | 35 | 35 | 30 |

As is clear from the above Tables, it has been found that the resin composition of the present invention is excellent in plating property. In contrast, the compositions of Comparative Examples were not able to exhibit sufficient plating property. Furthermore, it has been found that the resin composition of the present invention is excellent in mechanical properties, excellent in hue, and is hard to be decomposed. That is, according to the resin composition of the present invention, it has been found that the plating property can be enhanced with maintaining various performances.

The foregoing description of preferred embodiments of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated. It is intended that the scope of the invention not be limited by the specification, but be defined claims set forth below.

## Claims

1. A resin composition for laser direct structuring, comprising, relative to 100 parts by weight of a resin component comprising 30 to 100% by weight of a polycarbonate resin and 70% by weight or less of a styrene-based resin, 10 to 100 parts by weight of a glass filler and 2 to 20 parts by weight of a laser direct structuring additive,
wherein the laser direct structuring additive comprises a metal oxide, a component of the largest blending amount among the metal components is tin, a component of the second largest blending amount is antimony, and in addition lead and/or copper are contained.

2. The resin composition for laser direct structuring according to Claim 1,
wherein the laser direct structuring additive comprises 90% by weight or more of tin oxide and 3 to 8% by weight of antimony oxide.

3. The resin composition for laser direct structuring according to Claim 1 or 2,
wherein the laser direct structuring additive comprises 0.01 to 0.1% by weight of lead oxide and/or 0.001 to 0.01% by weight of copper oxide.

4. The resin composition for laser direct structuring according to any one of Claims 1 to 3, comprising styrene resin in an amount of 10% by weight or more as a resin component.

5. The resin composition for laser direct structuring according to any one of Claims 1 to 4,
wherein the glass filler is a glass fiber having an average fiber length of 200 µm or less.

6. The resin composition for laser direct structuring according to any one of Claims 1 to 5,
wherein the glass filler is coated with at least one sizing agent selected from a polyolefin resin and a silicone resin.

7. The resin composition for laser direct structuring according to any one of Claims 1 to 6, further comprising an elastomer and/or a phosphorus-based stabilizer.

8. A resin-molded article obtained by molding the laser direct structuring composition according to any one of Claims 1 to 7.

9. The resin-molded article according to Claim 8, further comprising a plated layer on a surface of the article.

10. The resin-molded article according to Claim 8 or 9, which is a mobile electronic device part.

11. The resin-molded article according to Claim 9 or 10, wherein the plated layer has a performance as an antenna.

12. A method for manufacturing a resin-molded article with a plated layer, comprising irradiating the surface of a resin-molded article, obtained by molding the thermoplastic resin composition according to any one of Claims 1 to 7, with a laser, and then applying a metal to form the plated layer.

13. The method for manufacturing a resin-molded article with a plated layer according to Claim 12, wherein the plating is copper plating.

14. A method for manufacturing a mobile electronic device part having an antenna, comprising the method for manufacturing a resin-molded article with a plated layer according to Claim 12 or 13.

## Patentansprüche

1. Harzzusammensetzung zur Laserdirektstrukturierung, umfassend relativ zu 100 Gewichtsteilen einer Harzkomponente, die 30 bis 100 Gew.-% eines Polycarbonat-Harzes und 70 Gew.-% oder weniger eines styrolbasierten Harzes umfasst, 10 bis 100 Gewichtsteile eines Glasfüllstoffs und 2 bis 20 Gewichtsteile eines Laserdirektstrukturierungszusatzes,
wobei der Laserdirektstrukturierungszusatz ein Metalloxid umfasst, eine Komponente der größten Mischungsmenge unter den Metallkomponenten Zinn ist, eine Komponente der zweitgrößten Mischungsmenge Antimon ist und zusätzlich Blei und/oder Kupfer enthalten sind.

2. Harzzusammensetzung zur Laserdirektstrukturierung nach Anspruch 1,
wobei der Laserdirektstrukturierungszusatz 90 Gew.-% oder mehr Zinnoxid und 3 bis 8 Gew.-% Antimon-Oxid umfasst.

3. Harzzusammensetzung zur Laserdirektstrukturierung nach Anspruch 1 oder 2,
wobei der Laserdirektstrukturierungszusatz 0,01 bis 0,1 Gew.-% Bleioxid und/oder 0,001 bis 0,01 Gew.-% Kupferoxid umfasst.

4. Harzzusammensetzung zur Laserdirektstrukturierung nach einem der Ansprüche 1 bis 3, umfassend Styrolharz in einer Menge von 10 Gew.-% oder mehr als eine Harzkomponente.

5. Harzzusammensetzung zur Laserdirektstrukturierung nach einem der Ansprüche 1 bis 4,
wobei der Glasfüllstoff eine Glasfaser ist, die eine mittlere Faserlänge von 200 µm oder weniger aufweist.

6. Harzzusammensetzung zur Laserdirektstrukturierung nach einem der Ansprüche 1 bis 5,
wobei der Glasfüllstoff mit zumindest einem Schlichtemittel beschichtet ist, das von einem Polyolefinharz und einem Silikonharz ausgewählt ist.

7. Harzzusammensetzung zur Laserdirektstrukturierung nach einem der Ansprüche 1 bis 6, ferner umfassend ein Elastomer und/oder einen phosphorbasierten Stabilisator.

8. Harzformteil, erhalten durch Formen der Laserdirektstrukturierungszusammensetzung nach einem der Ansprüche 1 bis 7.

9. Harzformteil nach Anspruch 8, ferner umfassend eine plattierte Schicht auf einer Oberfläche des Formteils.

10. Harzformteil nach Anspruch 8 oder 9, der ein Teil einer mobilen elektronischen Vorrichtung ist.

11. Harzformteil nach Anspruch 9 oder 10, wobei die plattierte Schicht eine Leistung als Antenne aufweist.

12. Verfahren zur Herstellung eines Harzformteils mit einer plattierten Schicht, umfassend das Bestrahlen der Oberfläche eines Harzformteils, das durch Formen der thermoplastischen Harzzusammensetzung nach einem der Ansprüche 1 bis 7 erhalten ist, mit einem Laser, und anschließend das Aufbringen eines Metalls, um die plattierte Schicht auszubilden.

13. Verfahren zur Herstellung eines Harzformteils mit einer plattierten Schicht nach Anspruch 12, wobei die Plattierung Kupferpiattierung ist.

14. Verfahren zur Herstellung eines Teils einer mobilen elektronischen Vorrichtung, der eine Antenne aufweist, umfassend das Verfahren zur Herstellung eines Harzformteils mit einer plattierten Schicht nach Anspruch 12 oder 13.

## Revendications

1. Composition de résine pour structuration directe au laser, comprenant, par rapport à 100 parties en poids d'un composant de résine comprenant de 30 à 100% en poids d'une résine de polycarbonate et 70% en poids ou moins d'une résine à base de styrène, de 10 à 100 parties en poids d'une charge de verre et de 2 à 20 parties en poids d'un additif de structuration directe au laser,
dans laquelle l'additif de structuration directe au laser comprend un oxyde métallique, un composant de la plus importante proportion du mélange parmi les composants métalliques est l'étain, un composant de la seconde plus importante proportion du mélange est l'antimoine, et en plus du plomb et/ou du cuivre sont intégrés.

2. Composition de résine pour structuration directe au laser selon la revendication 1,
dans laquelle l'additif de structuration directe au laser comprend 90% en poids ou plus d'oxyde d'étain et de 3 à 8% en poids d'oxyde d'antimoine.

3. Composition de résine pour structuration directe au laser selon la revendication 1 ou la revendication 2,
dans laquelle l'additif de structuration directe au laser comprend de 0,01 à 0,1% en poids d'oxyde de plomb et/ou de 0,001 à 0,01% en poids d'oxyde de cuivre.

4. Composition de résine pour structuration directe au laser selon les revendications 1 à 3, comprenant une résine à base de styrène dans une quantité de 10% en poids ou plus en tant qu'un composant de résine.

5. Composition de résine pour structuration directe au laser selon les revendications 1 à 4,
dans laquelle la charge de verre est une fibre de verre possédant une longueur de fibre moyenne de 200 µm ou moins.

6. Composition de résine pour structuration directe au laser selon les revendications 1 à 5,
dans laquelle la charge de verre est recouverte avec au moins un agent d'encollage choisi parmi une résine de polyoléfine et une résine de silicone.

7. Composition de résine pour structuration directe au laser selon les revendications 1 à 6, comprenant en outre un élastomère et/ou un stabilisateur à base de phosphore.

8. Article moulé en résine obtenu en moulant la composition de structuration directe au laser selon l'une quelconque des revendications 1 à 7.

9. Article moulé en résine selon la revendication 8, comprenant en outre une couche métallisée sur une surface de l'article.

10. Article moulé en résine selon la revendication 8 ou la revendication 9, qui est une partie d'un dispositif électronique mobile.

11. Article moulé en résine selon la revendication 9 ou la revendication 10, dans lequel la couche métallisée possède une performance en tant qu'antenne.

12. Procédé de fabrication d'un article moulé en résine avec une couche métallisée, comprenant l'irradiation de la surface d'un article moulé en résine, obtenu par moulage de la composition de résine thermoplastique selon l'une quelconque des revendications 1 à 7, avec un laser, et ensuite l'application d'un métal pour former la couche métallisée.

13. Procédé de fabrication d'un article moulé en résine avec une couche métallisée selon la revendication 12, dans lequel le placage est un placage au cuivre.

14. Procédé de fabrication d'une partie d'un dispositif électronique mobile possédant une antenne, comprenant le procédé de fabrication d'un article moulé en résine avec une couche métallisée selon la revendication 12 ou la revendication 13.
